# EUROPEAN PATENT APPLICATION

(11) **EP 2 850 944 A1**
(43) Date of publication of application: **25.03.2015**
(21) Application number: 13787829.4
(22) Date of filing: 30.04.2013
(51) Int. Cl.: A01N 43/50, A01M 1/20, A01N 25/00, A01N 43/653, A01N 47/40, A01P 3/00, A01P 7/04

(54) **TREE TRUNK INJECTION**

(30) Priority: 09.05.2012 JP 2012107600; 09.05.2012 JP 2012107601
(71) Applicant: Nippon Soda Co., Ltd., Tokyo 100-8165 (JP)
(72) Inventor: MAEKAWA Takahiro, Makinohara-shi Shizuoka 421-0412 (JP); OMORI Yasuhiro, Makinohara-shi Shizuoka 421-0412 (JP)
(74) Representative: Cabinet Plasseraud
(86) International application number: PCT/JP2013/062556
(87) International publication number: WO 2013/168630

(57) **Abstract**

The present invention provides a tree trunk injection agent whereby pathogenic fungi and/or pests in trees can be effectively controlled merely by a short-time application in a low chemical dose, and a method for controlling tree diseases using the tree trunk injection agent. According to one embodiment of the present invention, the tree trunk injection agent is obtained by adding, to an aqueous solution of an insecticidal component such as acetamiprid, a hardly soluble fungicidal component such as thiophanate-methyl so as to suspend the hardly soluble fungicidal component, wherein a particle size based on 50% volume of the fungicidal component is 4 µm or less, or adding thereto at least one fungicidal component selected from a group consisting of triflumizole and metconazole.

## Description

### TECHNICAL FIELD

The present invention relates to a tree trunk injection agent. More particularly, the present invention relates to a tree trunk injection agent which can control pathogenic fungi and/or pathogenic pests in trees effectively even at a low dose in a short-time treatment.

The present application claims priority on the basis of Japanese Patent Application No. 2012-107600, filed in Japan on May 9, 2012, and Japanese Patent Application No. 2012-107601, filed in Japan on May 9, 2012, the contents of which are incorporated herein by reference.

### BACKGROUND ART

In recent years in Japan, mass mortality caused by withering of the fagaceous trees such as Japanese oak, chinquapin and live oak (also referred to as Japanese oak wilt or fagaceous trees wilt disease) sometimes occurs. This Japanese oak wilt is caused by coleopteron Platypus quercivorus. The specific cause is as follows. Platypus quercivorus lay eggs in the trunk of oaks such as Japanese oak and live oak by drilling. There is an organ called mycangia in the body of Platypus quercivorus, and pathogenic filamentous fungus Raffaelea quercivora that has been attached to mycangia is brought into inside of trees. Tree cells are infected with Raffaelea quercivora by moving along the channel. When tree cells infected with Raffaelea quercivora die, the conducting vessels become clogged, and water flow is inhibited. As a result, trees are weakened, leaves change color, and eventually die by withering. Hatched larvae of Platypus quercivorus grow in the channel by taking filamentous fungi such as Raffaelea quercivora as bait. The adults of the next generation that have grown and emerged from pupae jump from the trees and bring up Raffaelea quercivora.

Insects living in a symbiotic relationship with pathogenic filamentous fungi in a manner similar to the above Platypus quercivorus are called ambrosia beetles. Especially, ambrosia coleoptera including the Platypus quercivorus are widely known. Other tree diseases caused by filamentous fungi such as Raffaelea quercivora that are mediated by these insects are also known. Examples of pathogenic fungi include fungi which belong to each genus such as Rafaellea, Ambrosiella, Dryadomyces, Ophiostoma and the like, are known. Among these, Dutch elm disease caused by Ophiostoma genus fungi that are closely related to the genus Rafaerea, is known worldwide as a serious tree disease. There are other tree diseases such as Laurel wilt caused by Rafaellea genus fungi, pines blue stain caused by Ophiostoma genus fungi, and oak wilt caused by Ceratocystis fagacearum fungus, and the like.

As existing measures to such as the above "Japanese oak wilt", (1) a method of preventing the intrusion of insects by covering the trees with a plastic sheet to a height of 2 to 4 m, (2) a method of applying insecticides to trees to kill insects, (3) a method of killing insects by fumigation or injection ofNCS (carbam agent), (4) a method of sterilizing by tree trunk injection of fungicides, for example, benomyl, have been reported (Patent Document 1).

As tree trunk injection agent used for sterilization method (4), for example, antiproliferative agents for Raffaelea quercivora containing a sterol biosynthesis inhibitor such as triforine, bitertanol, fenbuconazole, myclobutanil, tebuconazole and tetraconazole have been proposed in Patent Document 1.

It is described that the inhibition effect of the antiproliferative agents for Raffaelea quercivora on propagation-proliferation of Raffaelea quercivora was larger than the conventional tree trunk injection agent containing benomyl in Patent Document 1.

In addition, Non-Patent Document 1 discloses that a sterol biosynthesis inhibitor, propiconazole is highly effective for fungi which cause Laurel wilt.

### Prior Art Documents

### Patent Documents

Patent Document 1: Japanese Patent Application Publication No. 2009-184930 Non-Patent Documents

Non-Patent Document 1: Laurel wilt: a destructive new disease of redbay, avocado and related plants in the southeastern U.S.: Colloquium on Plant Pests of Regulatory Significance, University of Florida, January 23, 2008.

### DISCLOSURE OF THE INVENTION

### Problems to be Solved by the Invention

The first object of the present invention is to provide a tree trunk injection agent which can simultaneously and effectively control pests which introduce pathogens by puncturing the trees and the pathogens in the trees, and a disease prevention method using the tree trunk injection agent.

In addition, poorly soluble pesticidal active ingredient itself, such as benomyl, exerts superior control effect to pathogenic fungi, such as Raffaelea quercivora. However, it is time consuming and troublesome to inject the tree trunk injection agent that contains a poorly soluble pesticidal active ingredient in suspension, and the controlling effect against disease was sometimes insufficiently exhibited as a result.

Therefore, the second object of the present invention is to provide a tree trunk injection agent that can be injected in large amount in a short period of time in trees, and that can effectively control pathogens in trees evenly, and a disease prevention method using the tree trunk injection agent.

In addition, the third object of the present invention is to provide a tree trunk injection agent that can control effectively pathogens in trees even at a low dose, and a method for preventing diseases such as Japanese oak wilt by using the tree trunk injection agent.

### Means for Solving the Problems

As a result of conducting extensive studies to solve the aforementioned problems, the inventors of the present invention have revealed that diseases such as Japanese oak wilt can be effectively prevented by the tree trunk injection agent containing an insecticidal component and a fungicidal component. In addition, the inventors of the present invention found that the tree trunk injection agent comprising at least one pesticidal active ingredient having a specific size can be injected into trees in large amount in a short period of time, and that can effectively control evenly pathogens in trees. Furthermore, the inventors of the present invention found that when solution containing triflumizole or metconazole is used as the tree trunk injection agent, it is possible to control Raffaelea quercivora at a lower dose than the case in which the antiproliferative agents for Raffaelea quercivora containing triforine, etc. The present invention was completed by overlaying further investigations based on these findings.

That is, the present invention includes the following embodiments.
(1) A tree trunk injection agent containing at least one insecticidal component and at least one fungicidal component.
(2) The tree trunk injection agent according to (1), wherein the insecticidal component is at least one selected from a group consisting of a neonicotinoid-based insecticidal component and a pyrethroid-based insecticidal component.
(3) The tree trunk injection agent according to (2), wherein the insecticidal component is acetamiprid.
(4) The tree trunk injection agent according to any one of (1) to (3), wherein the fungicidal component is at least one selected from a group consisting of a benzimidazole-based fungicidal active component and a sterol biosynthesis inhibitor.
(5) The tree trunk injection agent according to (4), wherein the fungicidal component is at least one selected from a group consisting of thiophanate-methyl, triflumizole and metconazole.
(6) The tree trunk injection agent according to any one of (1) to (5), wherein the fungicidal component or/and the insecticidal component is contained and a particle size based on 50% volume of the fungicidal component or/and the insecticidal component is 4 µm or less.
(7) A tree trunk injection agent comprising at least one pesticidal active ingredient, wherein a particle size based on 50% volume of the pesticidal active ingredient is 4 µm or less.
(8) The tree trunk injection agent according to (7), wherein the pesticidal active ingredient is an ingredient for which the solubility in water at 25°C is 100 ppm or less.
(9) The tree trunk injection agent according to (7) or (8), wherein the pesticidal active ingredient is a benzimidazole-based fungicidal component.
(10) The tree trunk injection agent according to (9), wherein the pesticidal active ingredient is thiophanate-methyl.
(11) A tree trunk injection agent comprising at least one fungicidal component selected from a group consisting of triflumizole and metconazole.
(12) The tree trunk injection agent according to (11), further comprising an insecticidal component.
(13) The tree trunk injection agent according to (12), wherein the insecticidal component is at least one selected from a group consisting of a neonicotinoid-based insecticidal component and a pyrethroid-based insecticidal component.
(14) The tree trunk injection agent according to (12), wherein the insecticidal component is acetamiprid.
(15) The tree trunk injection agent according to any one of (1) to (14), wherein the tree trunk injection agent is used to control a disease caused by a fungus mediated by an ambrosia beetle.
(16) The tree trunk injection agent according to (15), wherein the tree trunk injection agent is used to prevent Japanese oak wilt.
(17) A method for preventing Japanese oak wilt comprising: applying the tree trunk injection agent according to any one of (1) to (14) to living standing fagaceous tree.

### Effects of the invention

The tree trunk injection agent of the present invention can be fully expected to control pests which introduce pathogens by puncturing trees and the pathogens in trees at a low dose, since the tree trunk injection agent of the present invention contains both of an insecticidal component and fungicidal component. In addition, the tree trunk injection agent of the present invention can be injected into trees in large amount in a short period of time, and that can effectively control evenly pests and/or pathogens in trees, since a pesticidal active ingredient is contained in a specific size. Moreover, by containing a specific fungicidal component, it is possible to control pathogens in tree at a low dose since control effect against pathogens such as Raffaelea quercivora is superior to that of the prior art. In accordance with the present invention, it is possible to effectively prevent diseases such as Japanese oak wilt by tree trunk injection, and to contribute significantly to the management of forest or tree.

### BEST MODE FOR CARRYING OUT THE INVENTION

The first embodiment of the present invention is a tree trunk injection agent containing at least one insecticidal component and at least one fungicidal component. According to this embodiment, it is possible to simultaneously and effectively control pests which introduce pathogens by puncturing trees and pathogens in trees. The mass ratio of fungicidal component and insecticidal component (fungicidal component/insecticidal component) is preferably 1/10 to 50/1, and more preferably 1/2 to 10/1.

Insecticidal components used in the present invention are not particularly limited, but they are preferably neonicotinoid-based insecticidal components or pyrethroid-based insecticidal components.

Examples of the neonicotinoid-based insecticidal components can include imidacloprid, acetamiprid, thiamethoxam, clothianidin, dinotefuran and the like.

Examples of the pyrethroid-based insecticidal components can include permethrin, cypermethrin, deltamethrin, fenvalerate, fenpropathrin, pyrethrin, allethrin, tetramethrin, resmethrin, dimethrin, propathrin, phenothrin, protollin, fluvalinate, cyfluthrin, cyhalothrin, flucythrinate, etofenprox, cycloprothrin, tralomethrin, silafluofen, brofenprox, acrinathrin, and the like.

A single kind alone or a combination of two or more kinds of these insecticidal components can be used. Among these, neonicotinoid-based insecticidal component is preferable, and acetamiprid is particularly preferable. Commercially available insecticides may be used as an insecticidal component. For example, Matsugreen (trademark) or Mospilan (trademark) manufactured by Nippon Soda Co., Ltd. can be exemplified.

Fungicidal components used in the present invention are not particularly limited, benzimidazole-based fungicidal components or sterol biosynthesis inhibitors are preferable.

Examples of the benzimidazole-based fungicidal component include benomyl, carbendazim, thiophanate, thiophanate-methyl, and the like.

Examples of the sterol biosynthesis inhibitors include triflumizole, tebuconazole, tetraconazole, metconazole, triforine, bitertanol, fenbuconazole, and myclobutanil, and the like.

A single kind alone or a combination of two or more kinds of these fungicidal components can be used. Among these, thiophanate-methyl or triflumizole is preferable. Commercially available fungicides may be used as fungicidal component. For example, Topsin M (trademark) or Trifmine (trademark) manufactured by Nippon Soda Co., Ltd. can be exemplified.

The second embodiment of the present invention is a tree trunk injection agent comprising at least one pesticidal active ingredient, wherein a particle size based on 50% volume of the pesticidal active ingredient is 4 µm or less, preferably, the particle size based on 50% volume of the pesticidal active ingredient is 0.1 to 4 µm. The particle size based on 50% volume of the pesticidal active ingredient is a 50% particle size in volume-based cumulative particle size distribution measured by using light scattering particle sizer in the state of being suspended in a liquid. It is so-called median diameter.

The pesticidal active ingredient contained in the above size is preferably poorly-soluble or insoluble in liquid, and is more preferably poorly-soluble or insoluble in water. The solubility in water at 25 °C of the pesticidal active ingredient which is poorly-soluble or insoluble in water is preferably 100 ppm or less and more preferably 50 ppm or less. In the present invention, poorly-soluble or insoluble pesticidal active ingredient and soluble or readily-soluble pesticidal active ingredient can be used in combination, and either or both of the pesticidal active ingredients just have to be contained in the above size.

The pesticidal active ingredients used in the present invention is not particularly limited as long as the active ingredients are used for pesticides, but a fungicidal component or an insecticidal component is preferable, and a combination of a fungicidal component and an insecticidal component is more preferable. As described above, controlling activity is particularly high when the fungicidal component and the insecticidal component are used in combination. The preferred mass ratio of the both components is the same as the first embodiment of the present invention.

Fungicidal components used in the present invention are not particularly limited, but benzimidazole-based fungicidal components are preferable. Examples of the benzimidazole-based fungicidal component can include those as exemplified above. Among these, thiophanate-methyl is preferable. A single kind alone or a combination of two or more kinds of these fungicidal components can be used.

Insecticidal components used in the present invention are not particularly limited, but they are preferably neonicotinoid-based insecticidal components. Examples of the neonicotinoid-based insecticidal components can include those as exemplified above. Among these, acetamiprid is preferable. A single kind alone or a combination of two or more kinds of these insecticidal components can be used.

The third embodiment of the present invention is a tree trunk injection agent comprising at least one fungicidal component selected from a group consisting of triflumizole and metconazole. Triflumizole and metconazole are known fungicidal substances which are included in the sterol biosynthesis inhibitors. The present invention revealed that among the sterol biosynthesis inhibitors, they have specifically high control efficacy against Raffaelea quercivora, and the like.

The concentration of at least one fungicidal component selected from a group consisting of triflumizole and metconazole is preferably 0.01 to 5 mass%, more preferably 0.1 to 1 mass%. The concentration of the fungicidal component in the tree trunk injection agent of the present invention can be adjusted to the above range by dilution with the liquid when the fungicide is contained at high concentration.

The tree trunk injection agent according to the present invention may further contain a pesticidal active ingredient. Examples of the pesticidal active ingredients include insecticidal components, acaricidal components, pest repellent components, fungicidal components other than triflumizole and metconazole, and the like. Among these, insecticidal components are preferable since it is possible to effectively prevent disease by controlling insects (Platypus quercivorus, etc.) that mediate disease fungi.

When at least one insecticidal component selected from a group consisting of neonicotinoid-based insecticidal components and pyrethroid-based insecticidal components is simultaneously used with at least one fungicidal component selected from a group consisting of triflumizole and metconazole, it is possible to effectively prevent the disease in lower doses than when each component is used alone because of the synergistic action of fungicidal effect and insecticidal effect.

The amount of at least one insecticidal component selected from a group consisting of neonicotinoid-based insecticidal components and pyrethroid-based insecticidal components is not particularly limited, but it is preferably 2 to 1,000 parts by weight, and more preferably 10 to 200 parts by weight, based on 100 parts by weight of at least one fungicidal component selected from a group consisting of triflumizole and metconazole.

The fourth embodiment of the present invention is a method for preventing the disease of tree comprising: applying the tree trunk injection agent of the present invention to living standing tree.

The disease is not particularly limited, but it is particularly effective against diseases caused by fungi that are mediated by ambrosia beetles.

Diseases caused by fungi that are mediated by ambrosia beetles are not particularly limited, but diseases caused by pathogenic fungi which belong to each genus Rafaellea, Ambrosiella, Dryadomyces, Ophiostoma, Ceratocystis are exemplified.

Among these target diseases, diseases caused by pathogenic fungi which belong to genus Rafaellea or Ophiostoma are preferable as preventing target of the present invention, and in particular, Japanese oak wilt, Laurel wilt and Dutch elm disease are preferable, and the preventing method for Japanese oak wilt against fagaceous trees is most preferable.

The tree trunk injection agent is a liquid formulation. The liquid formulation may be a concentrated solution of the fungicidal and/or insecticidal component, and may be a diluted solution of the fungicidal and/or insecticidal component. In addition, the liquid formulation may be in the form of an emulsion, flowable, microemulsion, emulsion oil in water, suspoemulsion or suspension. A liquid used for preparing the liquid formulation is preferably one capable of emulsifying, suspending or dissolving the fungicidal component, and more preferably one capable of emulsifying, suspending or dissolving the fungicidal component and/or the pesticidal active ingredient.

Examples of the liquid include water, a hydrophilic liquid, a lipophilic liquid, and the like.

Examples of the hydrophilic liquid include a lower alcohol having 1 to 4 carbon atoms, such as methyl alcohol, ethyl alcohol, propyl alcohol and butyl alcohol, and the like; glycols such as ethylene glycol, propylene glycol, diethylene glycol, and the like, and their derivatives; glycol esters such as propylene glycol fatty acid ester, and the like, and their derivatives; glycol ethers such as ethylene glycol monomethyl ether, ethylene glycol isopropyl ether, and the like, and their derivatives; ketones such as cyclohexanone, acetone, methyl ethyl ketone, methyl isobutyl ketone, and the like; carboxylic acid esters such as ethyl acetate and butyl acetate, and the like; sulfoxides such as dimethyl sulfoxide, and the like; glycerol, glycerol esters, glycerol ethers, pyrrolidones such as N-methylpyrrolidone, and the like; nitriles such as acetonitrile, and the like; cyclic ethers such as tetrahydrofuran, dioxane, and the like.

Examples of the lipophilic liquid include aromatic compounds such as benzene, toluene, xylene, benzyl alcohol, and the like; alicyclic hydrocarbons such as cyclohexane, and the like; high boiling paraffins such n-decane, and the like; high boiling ketones, high boiling esters, high boiling glycols; animal and vegetable fats such as rapeseed oil, soybean oil, olive oil, fish oil, cod liver oil, lanolin, and the like; fatty acids such as oleic acid, lanolin acid, palmitic acid, and the like and their derivatives, and the like.

In addition to the above pesticidal active ingredient, the tree trunk injection agent according to the present invention may also contain surfactants, stabilizing agents, dispersing agents and other additives, if necessary.

Examples of the surfactant include nonionic surfactants, anionic surfactants, cationic surfactants, and the like. Examples of the nonionic surfactant include polyoxyethylene alkyl allyl ethers, polyoxyethylene alkyl ethers, polyoxyethylene fatty acid esters, sorbitan fatty acid esters, sucrose fatty acid esters, polyoxyethylene hydrogenated castor oil ether, and the like. Examples of the anionic surfactant include alkyl benzene sulfonate salts, alkyl sulfate ester salts, dialkyl sulfosuccinate salts, higher fatty acid salts, and the like. Examples of the cationic surfactant include alkyl amines, quaternary ammonium salts, alkylpyridinium salts, and the like.

Examples of the stabilizing agent include, for example, pH adjusting agents such as acid, alkali, and their salts, and the like, antioxidants such as BHT, DBHQ, tocopherol, and the like. It is possible to maintain the stability of the formulation when the stabilizing agent is contained in the tree trunk injection agent.

Examples of the dispersing agent include, for example, white carbon, polyvinyl pyrrolidone, carboxymethyl cellulose, hydroxypropyl cellulose, xanthan gum, and the like. It is possible to maintain the dispersibility of the formulation when the dispersing agent is contained in the tree trunk injection agent.

Examples of other additives include anti-foaming agents, preservatives, and the like.

Methods of injecting the tree trunk injection agent of the present invention into a tree are not particularly limited. For example, the tree trunk injection agent may be injected in the following manner. First, a container with a nozzle in which the tree trunk injection agent is housed, is prepared. The container preferably has a degree of flexibility that can push out air from a nozzle by squeezing. As such containers, for example, plastic containers are exemplified. The nozzle is not particularly limited as long as it can be sent into the hole bored in the tree trunk and it can send the liquid formulation into inside of the tree. Although, for convenience of transportation of the tree trunk injection agent, the container preferably has a structure in which a lid with a nozzle can be replaced with a lid without a nozzle, or a structure in which a cap can be fitted to the nozzle opening.

Next, hole (injection hole) is bored in the trunk of the living standing trees such as the fagaceous trees. The diameter of the injection hole can be a suitable diameter to fit to the size of the nozzle, for example, the diameter of the injection hole is about 7 to 8 mm. The injection hole is preferably bored to the main conduit section (about 4 cm depth), which is inclined 45 degrees down. The injection holes are preferably bored around the lower part of the stem (ground contact) at a plurality of distributed locations. When the position of the injection hole is too high, Platypus quercivorus sometimes drills below the site of the injection hole, thereby mediating Raffaelea quercivora. The injection hole may be bored with a drill or the like, and it is possible to utilize holes that have been made by drilling trees by Platypus quercivorus.

Then, the nozzle of the container is inserted into the injection hole, and the tree trunk injection agent is injected into the trees. It is a preferable method in which the tree trunk injection agent is injected into the trees by the atmospheric pressure. It is preferable to discharge the air in the nozzle by crushing the container at the start of injection. It is preferable to set the atmosphere of inside of the container to the atmospheric pressure by opening perforations at the bottom of the container which is inserted downward.

It is possible to apply the tree trunk injection agent of the present invention into the trees by spraying or applying to the trunk, by spraying to the plant foot, or by the soil drench, other than by a trunk injection. In some cases the effect of disease control is increased by the combination of the above application method and a trunk injection method.

Injection volume is not particularly limited, and it can be increased or decreased depending on the trunk diameter at breast height. For example, in the case of the tree trunk injection agent in which the concentration of the pesticidal active ingredient is 0.035 %, as a guide, the volume can be set to 600 to 800 ml for less than 20 cm diameter at breast height, 1000 to 1200 ml for 20 cm or more and less than 30 cm diameter at breast height, 1400 to 2000 ml for 30 cm or more and less than 40 cm diameter at breast height, 2200 to 3200 ml for 40 cm or more and less than 50 cm diameter at breast height, 3400 to 5200 ml for 50 cm or more and less than 60 cm diameter at breast height, and when the diameter at breast height is 60 cm or more, 200 ml is added every time in which the diameter is increased by 4 cm.

After the injection is completed, it is preferable to clog the injection hole with nog, rubber stopper, healing agents, and the like, to prevent entry of rain water and fungi.

The tree trunk injection agent of the present invention can be applied to the trees normally at the time from the spring to the summer, and preferably at the time from the leaf unfolding time to the time before the generation of Platypus quercivorus

(emergence start of the new adults). Although the time of emergence start of the new adults varies by region, it is generally from May to June in Japan.

Examples of the tree to which the tree trunk injection agent of the present invention can be applied include, for example, trees of Quercus such as Quercus phillyraeoides, Quercus acutissima, Quercus variabilis, Quercus dentata, Quercus mongolica, Quercus serrata, Quercus gilva, Quercus acuta, Quercus glauca, Quercus salicina, Quercus myrsinifolia, and the like, trees of Castanea such as Castanea crenata, and the like, trees of Castanopsis such as Castanopsis sieboldii, Castanopsis cuspidate, and the like, trees of Lithocarpus such as Lithocarpus edulis, and the like.

### Examples

The following provides a more detailed explanation of the present invention by indicating examples. However, the present invention is not limited by the following examples.

### [Example 1-1]

97.58 parts of water were placed in a container, then 0.2 parts of acetamiprid ingredient was charged and dissolved. To this solution, 1 part of 2 % aqueous solution of hydroxypropyl cellulose, 0.15 parts of citric acid monohydrate, 0.47 parts of disodium hydrogen phosphate dodecahydrate, 0.5 parts of 40% suspension of thiophanate-methyl, 0.075 parts of preservative (caisson CG; Rohm & Haas Co.), 0.02 parts of white carbon (CARPLEX FPS-500; Shionogi & Co., Ltd.), and 0.003 parts of anti-foaming agent (SILFOAM SE39; Wacker Asahi Kasei Silicone Co., Ltd.) were added, and uniformly dispersed by stirring, to obtain a tree trunk injection agent -1. The tree trunk injection agent -1 was a suspension which contains thiophanate-methyl at the size of the particle diameter of 1.543 µm based on 50% volume.

### [Example 1-2]

The tree trunk injection agent -2 was obtained in the same manner as Example 1 except that the amount of water was changed to 97.48 parts and amount of acetamiprid ingredient was changed to 0.3 parts. The tree trunk injection agent -2 was a suspension which contains thiophanate-methyl at the size of the particle diameter of 1.543 µm based on 50% volume.

### [Example 1-3]

87.38 parts of water were placed in the container, then 0.4 parts of acetamiprid ingredient and 10 parts of y-butyrolactone were added and dissolved. To this solution, 1 part of an aqueous solution of 2% hydroxypropyl cellulose, 0.15 parts of citric acid monohydrate, 0.47 parts of disodium hydrogen phosphate dodecahydrate, 0.5 parts of suspension of 40% thiophanate-methyl, 0.075 parts of preservative (caisson CG; Rohm & Haas Co.), 0.02 parts of white carbon (CARPLEX FPS-500; Shionogi & Co., Ltd.), and 0.003 parts of anti-foaming agent (SILFOAM SE39; Asahi Kasei Wacker Silicone Co., Ltd.) was added, and uniformly dispersed by stirring, to obtain a tree trunk injection agent -3. The tree trunk injection agent -3 was a suspension which contains thiophanate-methyl at the size of the particle diameter of 1.543 µm based on 50% volume.

### [Example 1-4]

The liquid formulation of Matsugreen 2 (manufactured by Nippon Soda Co., Ltd., containing 2% acetamiprid) was diluted 50-fold with water. To this diluted solution, a suspension of thiophanate-methyl whose particle diameter is 1.543 µm based on 50% volume was added in such a way that the concentration of thiophanate-methyl is 0.2%, and uniformly dispersed by stirring, to obtain a tree trunk injection agent -4. The tree trunk injection agent -4 was a suspension which contains thiophanate-methyl at the size of the particle diameter of 1.543 µm based on 50% volume.

### [Comparative Example 1-1]

Commercially available 50% benomyl wettable powder (manufactured by Sumitomo Chemical Co., Ltd., Benlate wettable powder) was diluted 500-fold with water and uniformly mixed, to obtain a tree trunk injection agent -5. The tree trunk injection agent -5 was a suspension which contains benomyl at the size of the particle diameter of 7.093 µm based on 50% volume.

### [Comparative Example 1-2]

The tree trunk injection agent -6 was obtained in the same manner as Example 4 except that the wettable powder containing 70% thiophanate-methyl was used instead of a suspension containing thiophanate-methyl whose particle diameter is 1.543 µm based on 50% volume. The tree trunk injection agent -6 was a suspension which contains thiophanate-methyl at the size of the particle diameter of 5.178 µm based on 50% volume.

### (Tree trunk injection test)

### [Test Example 1]

200 ml of the tree trunk injection agent was put into each three drug bottles, and the bottles were closed with lids equipped with a nozzle. Three injection holes with the diameter of 7 mm and the depth of 3 cm were bored in the trunk of living standing tree of Quercus serrata by drill. Each one drug bottle was inserted into each injection hole, and injection of the tree trunk injection agent, the total amount of which was 600 ml, was attempted by natural pressure.

The number of bottles whose injection had been completed was recorded at 6 hours after and 24 hours after the start of the injection time. This test was carried out regarding to the tree trunk injection agent -1 to the tree trunk injection agent -6. The results are shown in Table 1.

**[Table 1]**

| | | Injection completion number when 6 hours elapsed | Injection completion number when 24 hours elapsed |
|---|---|---|---|
| Example 1-1 | Tree trunk injection agent -1 | 1 | 3 |
| Example 1-2 | Tree trunk injection agent-2 | 0 | 3 |
| Example 1-3 | Tree trunk injection agent -3 | 0 | 3 |
| Example 1-4 | Tree trunk injection agent-4 | 1 | 3 |
| Comparative example 1-1 | Tree trunk injection agent -5 | 0 | 0 |
| Comparative example 1-2 | Tree trunk injection agent -6 | 0 | 1 |

From the above results, it is possible to inject 600 ml or more within 24 hours, and sufficient control of pathogens in trees can be expected when the tree trunk injection agent in which at least one pesticidal active ingredient is contained at the size of the particle diameter of 4 µm or less based on 50% volume (Examples). On the other hand, it can be understood that only small volume can be injected when 24 hours elapsed, and there is anxiety in the control of pathogens at sites where the active ingredient is not reached when the tree trunk injection agent in which pesticidal active ingredient is contained at the size of the particle diameter of more than 4 µm based on 50% volume (Comparative Examples).

### (Flat plate antifungal test)

### [Example 2-1]

The tree trunk injection agents was obtained by dissolving triflumizole to be each concentration of 100 ppm 10 ppm, 1 ppm, 0.1 pmm, and 0.01 ppm in solution for PDA (potato dextrose agar) medium. These tree trunk injection agents were poured into Petri dishes with inner diameter of 9 cm, and allowed to solidify to produce plate mediums with diameter of 9 cm. In this medium, the flora disk of Raffaelea quercivora was plated. This was cultured statically for 3 days to 4 days at 25 °C. Then, the diameter of the flora was measured, and the inhibition rate of hyphal elongation was calculated. The results are shown in Table 1. The inhibition rate of hyphal elongation (%) was calculated based on the formula: ((flora diameter of untreated group - flora diameter of medium containing triflumizole) / flora diameter of untreated group) × 100.

### [Example 2-2]

The inhibition rate of hyphal elongation was calculated in the same manner as Example 1 except for using metconazole instead of triflumizole. The results are shown in Table 1.

### [Comparative Example 2-1]

The inhibition rate of hyphal elongation was calculated in the same manner as Example 1 except for using tetraconazole instead of triflumizole. The results are shown in Table 1. "-" in Table 1 indicates that it is not carried out.

### [Comparative Example 2-2]

The inhibition rate of hyphal elongation was calculated in the same manner as Example 1 except for using hexaconazole instead of triflumizole. The results are shown in Table 1. "-" in Table 1 indicates that it is not carried out.

### [Comparative Example 2-3]

The inhibition rate of hyphal elongation was calculated in the same manner as Example 1 except for using myclobutanil instead of triflumizole. The results are shown in Table 1. "-" in Table 1 indicates that it is not carried out.

### [Comparative Example 2-4]

The inhibition rate of hyphal elongation was calculated in the same manner as Example 1 except for using triforine instead of triflumizole. The results are shown in Table 1. "-" in Table 1 indicates that it is not carried out.

**[Table 2]**

| Inhibition rate of hyphal elongation | | Concentration (ppm) | | | | |
|---|---|---|---|---|---|---|
| | Antibacterial ingredient | 100 | 10 | 1 | 0.1 | 0.01 |
| Example 2-1 | triflumizole | 100 | 100 | 96 | 95 | 25 |
| Example 2-2 | metconazole | 100 | 98 | 97 | 59 | 35 |
| Comparative example 2-1 | tetraconazole | 100 | 100 | 60 | - | - |
| Comparative example 2-2 | hexaconazole | 100 | 98 | 33 | - | - |
| Comparative example 2-3 | myclobutanil | 100 | 96 | 44 | - | - |
| Comparative example 2-4 | triforine | 100 | 26 | 0 | 0 | - |

From the above results, it is understood that the tree trunk injection agent of the present invention has antifungal effect on Raffaelea quercivora (25% or more of the inhibition rate of hyphal elongation), even at low concentration of 0.01 ppm. In contrast, it is understood that conventional tree trunk injection agent containing tetraconazole, hexaconazole, myclobutanil, or triforine, etc. is not exhibited any antifungal effect at low concentrations of less than about 1 ppm. In addition, neonicotinoid-based insecticidal components and pyrethroid-based insecticidal components have excellent pest control effect.

The tree trunk injection agent of the present invention used in combination of at least one fungicidal component selected from a group consisting of triflumizole and metconazole with a neonicotinoid-based insecticidal component or a pyrethroid-based insecticidal component is expected to effectively control pests that mediate pathogen and pathogen itself, and it is useful for the prevention of Japanese oak wilt caused by Platypus quercivorus and Raffaelea quercivora.

### INDUSTRIAL APPLICABILITY

It can be sufficiently expected that the tree trunk injection agent of the present invention can control pests which introduce pathogens by puncturing the trees and the pathogens in the trees at a low dose because the tree trunk injection agent of the present invention contains both of an insecticidal component and a fungicidal component. In addition, the tree trunk injection agent of the present invention can be injected in large amount in a short period of time into trees, and that can effectively control evenly pests and/or pathogens in the trees, since a pesticidal active ingredient is contained in a specific size. Furthermore, the tree trunk injection agent of the present invention can control pathogens in the trees at a low dose by containing a specific fungicidal component because controlling effect on pathogens such as Raffaelea quercivora is excellent compared with the conventional ones. The present invention can contribute significantly to the management of forest or tree since it can effectively prevent diseases such as Japanese oak wilt by trunk injection. Accordingly, the present invention is extremely useful industrially.

## Claims

1. A tree trunk injection agent containing at least one insecticidal component and at least one fungicidal component.

2. The tree trunk injection agent according to claim 1, wherein the insecticidal component is at least one selected from a group consisting of a neonicotinoid-based insecticidal component and a pyrethroid-based insecticidal component.

3. The tree trunk injection agent according to claim 2, wherein the insecticidal component is acetamiprid.

4. The tree trunk injection agent according to any one of claims 1 to 3, wherein the fungicidal component is at least one selected from a group consisting of a benzimidazole-based fungicidal active component and a sterol biosynthesis inhibitor.

5. The tree trunk injection agent according to claim 4, wherein the fungicidal component is at least one selected from a group consisting of thiophanate-methyl, triflumizole and metconazole.

6. A tree trunk injection agent comprising at least one pesticidal active ingredient, wherein a particle size based on 50% volume of the pesticidal active ingredient is 4 µm or less.

7. The tree trunk injection agent according to claim 6, wherein the pesticidal active ingredient is an ingredient for which the solubility in water at 25°C is 100 ppm or less.

8. The tree trunk injection agent according to claim 6 or 7, wherein the pesticidal active ingredient is a benzimidazole-based fungicidal component.

9. The tree trunk injection agent according to claim 8, wherein the pesticidal active ingredient is thiophanate-methyl.

10. A tree trunk injection agent comprising at least one fungicidal component selected from a group consisting of triflumizole and metconazole.

11. The tree trunk injection agent according to claim 10, further comprising an insecticidal component.

12. The tree trunk injection agent according to claim 11, wherein the insecticidal component is acetamiprid.

13. The tree trunk injection agent according to any one of claims 1 to 12, wherein the tree trunk injection agent is used to control a disease caused by a fungus mediated by an ambrosia beetle.

14. The tree trunk injection agent according to claim 13, wherein the tree trunk injection agent is used to prevent Japanese oak wilt.

15. A method for preventing Japanese oak wilt comprising: applying the tree trunk injection agent according to any one of claims 1 to 12 to living standing fagaceous tree.
